# EUROPÄISCHE PATENTSCHRIFT

(11) **EP 3 377 759 B1**
(45) Veröffentlichungstag und Bekanntmachung des Hinweises auf die Patenterteilung: **12.05.2021**
(21) Anmeldenummer: 16797557.2
(22) Anmeldetag: 17.11.2016
(51) Int. Cl.: F03D 7/02

(54) **STEUERUNG EINER WINDENERGIEANLAGE MIT VERSTELLBAREN ROTORBLÄTTERN**
CONTROL OF A WIND TURBINE HAVING ADJUSTABLE ROTOR BLADES
COMMANDE D'UNE ÉOLIENNE À PALES DE ROTOR RÉGLABLES

(30) Priorität: 18.11.2015 DE 102015119986
(43) Veröffentlichungstag der Anmeldung: 26.09.2018
(73) Patentinhaber: Wobben Properties GmbH, 26607 Aurich (DE)
(72) Erfinder: ALTMIKUS, Andree, 26605 Aurich (DE); DE BOER, Wolfgang, 26802 Moormerland (DE); MESSING, Ralf, 26605 Aurich (DE)
(74) Vertreter: Eisenführ Speiser
(86) Internationale Anmeldenummer: PCT/EP2016/077928
(87) Internationale Veröffentlichungsnummer: WO 2017/085156

(56) Entgegenhaltungen:
- EP-A1- 2 848 805
- EP-A1- 3 034 867
- US-A1- 2013 134 711
- US-A1- 2014 084 587

## Beschreibung

Die vorliegende Erfindung betrifft ein Verfahren zum Steuern einer Windenergieanlage mit Rotorblättern mit verstellbarem Blattwinkel. Die vorliegende Erfindung betrifft auch eine Windenergieanlage mit Rotorblättern mit verstellbarem Blattwinkel.

Windenergieanlagen mit Rotorblättern mit verstellbaren Blattwinkeln sind allgemein bekannt. Das Verstellen der Blattwinkel wird auch im deutschen Sprachgebrauch in der Fachwelt häufig als Pitchen bezeichnet. Ein übliches Regelungskonzept für solche Windenergieanlagen ist beispielsweise dem europäischen Patent EP 0 847 496 zu entnehmen. Demnach wird eine Windenergieanlage in einem Teillastbetrieb für Windgeschwindigkeiten bis zu einer Nennwindgeschwindigkeit mit einem festen Blattwinkel betrieben. Bei diesem Blattwinkel wird davon ausgegangen, dass die Windenergieanlage optimal arbeitet. In diesem Teillastbetrieb wird nun die Windenergieanlage mit konstantem Blattwinkel so betrieben, dass sie mit zunehmender Windgeschwindigkeit mehr Leistung abgibt. Dafür ist regelmäßig eine Drehzahl-Leistungskennlinie hinterlegt. Dabei kann die Regelung so arbeiten, dass die aktuelle Drehzahl erfasst wird und eine Leistung gemäß der hinterlegten Kennlinie dazu passend eingestellt wird. Entsprechend arbeitet die Windenergieanlage dann in einem festen aerodynamischen Arbeitspunkt. Sollte allerdings die Drehzahl sich erhöhen oder verringern, wird die Leistung entsprechend angepasst, bis die Windenergieanlage erneut diesen einen Arbeitspunkt gefunden hat.

Dieser Teillastbetrieb reicht insoweit bis zur Nennwindgeschwindigkeit und wenn die Nennwindgeschwindigkeit erreicht ist, ist regelmäßig auch die Nennleistung P_{N} und die Nenndrehzahl n_{N} erreicht.

Steigt der Wind nun weiter an, nämlich über die Nennwindgeschwindigkeit hinaus, so wird dann der Blattwinkel verstellt, also gepitcht. Das wenigstens eine Rotorblatt, heutzutage sind es üblicherweise drei Rotorblätter, wird dann nach und nach, also sukzessive mit steigender Windgeschwindigkeit, aus dem Wind in Richtung auf eine Fahnenstellung gedreht. Die Leistung und die Drehzahl werden hierbei konstant gehalten, nämlich üblicherweise auf ihren Nennwerten P_{N} bzw. n_{N}. Steigt die Windgeschwindigkeit noch weiter stark an, besonders über eine Grenzwindgeschwindigkeit hinaus, so kann es notwendig sein, die Drehzahl n und die Leistung P auch zu reduzieren, wobei hier entsprechend der Blattwinkel sehr stark gepitcht wird. Alternativ kann bei einer Grenzgeschwindigkeit abgeschaltet werden.

Dieser Bereich oberhalb der Nennwindgeschwindigkeit bis zur Grenzgeschwindigkeit wird auch als Volllastbetrieb bezeichnet. Der Bereich oberhalb der Grenzgeschwindigkeit bzw. Grenzwindgeschwindigkeit kann auch als Sturmbereich bezeichnet werden.

Diese Regelung hat sich bewährt und ist in vielen Windenergieanlagen, wahrscheinlich in den meisten der Windenergieanlagen in der Welt implementiert, zumindest was die Regelung im Teillastbetrieb und im Vollastbetrieb anbelangt und natürlich insoweit die Anlage verstellbare Rotorblätter aufweist.

Problematisch ist nun, dass besonders mit zunehmender Größe von Windenergieanlagen, die auch eine zunehmende Länge und dabei Leichtbauweise der Rotorblätter mit sich bringt, die Annahme eines steifen Rotorblattes selbst für vereinfachende Berechnungen und Messungen nicht mehr immer zutrifft. Aus diesem Grund kann das oben genannte Regelungskonzept in manchen Fällen nicht mehr ohne weiteres anwendbar sein.

Auch ansonsten können für solche langen Rotorblätter in Leichtbauweise bisherige Stabilitätsüberlegungen in ihrer Anwendung an ihre Grenzen stoßen. Beispielsweise wird hierbei auf eine Windenergieanlage von ENERCON verwiesen, die E-126, die einen Rotordurchmesser von etwa 126 m hat und somit, nach Abzug des Gondeldurchmessers, Rotorblätter mit einer Länge von fast 60 m aufweist. Bei dieser Windenergieanlage, die mit zu den größten Windenergieanlagen der Welt gehört, ist das Rotorblatt mehrteilig und weist in einem inneren Bereich, der also näher zur Rotornabe weist, einen Stahlabschnitt auf. Dadurch kann eine gewisse Steifigkeit erreicht werden und dieses innere Teil kann auch ein äußeres Blattteil aus faserverstärktem Kunststoff tragen, das nicht höchste Anforderungen an Leichtbauweise erfüllen muss. Erfahrungen zu einer solchen Windenergieanlage können nicht ohne weiteres auf Windenergieanlagen mit Rotorblättern leichterer Bauweise übertragen werden.

Aus der EP 2848805 A1 ist ein Verfahren zum Betrieb einer Windturbine bekannt, die einen Rotor mit verstellbaren Rotorblättern aufweist. Dabei tritt das Problem auf, dass die Rotorblätter der Windturbine unterhalb der Nennwindgeschwindigkeit einer Torsion unterworfen sind und deshalb bei einem standardmäßig vorgegebenen Pitchwinkel unter aerodynamisch suboptimalen Bedingungen betrieben werden. Als Abhilfe wird vorgeschlagen, Dehnmessstreifen auf den Rotorblättern vorzusehen, um eine Torsion der Rotorblätter festzustellen. Die Messdaten der Dehnmessstreifen werden dazu verwendet, um den Pitchwinkel so anzupassen, dass die gemessene Torsion kompensiert wird.

Das Deutsche Patent- und Markenamt hat in der Prioritätsanmeldung zu vorliegender Anmeldung folgenden Stand der Technik recherchiert: US 2014/0017079 A1, EP 0 847 496 B1, EP 2 530 302 A1, WO 2011/134473 A1, WO 2012/007004 A2 und WO 2016/101961 A1.

Der vorliegenden Erfindung liegt somit die Aufgabe zugrunde, zumindest eines der oben genannten Probleme zu adressieren. Insbesondere soll eine Lösung vorgeschlagen werden, die besonders das Verhalten langer Rotorblätter in Leichtbauweise berücksichtigt, insbesondere besser berücksichtigt als bisherige Regelungsverfahren. Zumindest soll gegenüber bisher Bekanntem eine Alternative vorgeschlagen werden.

Erfindungsgemäß wird ein Verfahren gemäß Anspruch 1 vorgeschlagen. Demnach wird eine Windenergieanlage mit Rotorblättern mit verstellbarem Blattwinkel zugrunde gelegt. Diese wird abhängig der Windgeschwindigkeit in einem Teillastbetrieb oder einem Volllastbetrieb betrieben. Im Teillastbetrieb, der für Windgeschwindigkeiten bis zu einer Nennwindgeschwindigkeit vorliegt, ist ein fester Teillastwinkel vorgesehen, der beispielsweise als fester Wert implementiert sein kann und der nachfolgend auch als Teillastwinkel bezeichnet wird.

Oberhalb der Nennwindgeschwindigkeit wird die Windenergieanlage in dem Volllastbetrieb betrieben. Dabei wird der Blattwinkel mit zunehmender Windgeschwindigkeit vergrößert und weist Werte auf, die größer als der Teillastwinkel sind. Gegebenenfalls muss das nicht sofort für den vordersten Bereich des Volllastbetriebs gelten.

Es wird nun hierzu ergänzend vorgeschlagen, dass im Teillastbetrieb ab einem vorbestimmten Betriebszustand der Blattwinkel gegenüber dem Teillastwinkel verringert wird.

Dabei liegt hier eine Definition des Blattwinkels zugrunde, bei der der Teillastwinkel klein ist und der Winkel in Fahnenstellung groß ist. Diese Definition liegt auch dem oben genannten Dokument EP 0 847 496 zu Grunde. Ein Verstellen von dem Teillastwinkel in Richtung zur Fahnenstellung ist also gemäß dieser Definition eine Vergrößerung des Blattwinkels. Es wird nun aber vorgeschlagen, im Teillastbetrieb den Blattwinkel ab einem vorbestimmten Betriebszustand zu verkleinern, also mit anderen Worten von einer Fahnenstellung noch weiter weg zu drehen.

Ein vorbestimmter Betriebszustand ist erfindungsgemäß eine vorbestimmte Drehzahl und/oder eine vorbestimmte Leistung und die Verstellung wird dann vorgenommen, wenn dieser vorbestimmte Drehzahlwert und/oder vorbestimmte Leistungswert erreicht wird. Diese Verstellung des Blattwinkels kann auch kontinuierlich oder zumindest mit einer Flanke oder Rampe erfolgen. Wird also der vorbestimmte Betriebszustand erreicht, muss keine schlagartige Verstellung des Blattwinkels erfolgen. Diese Verstellung des Blattwinkels zu einem noch geringeren Wert als vorher kann beispielsweise eine

Verstellung des Blattwinkels um 2°, 3°, 4° oder 5° sein, um ein paar bevorzugte Beispiele zu nennen.

Es liegt hier die Erkenntnis zugrunde, dass das Rotorblatt nicht mehr als näherungsweise steif angesehen werden kann, sondern sich im Betrieb, besonders durch die Belastung durch den Wind verändert, insbesondere tordiert. Das kann aber auch beispielsweise mit einer Verbiegung zusammen auftreten und zusammenwirken. Es wird davon ausgegangen, dass diese Veränderung vollständig reversibel ist.

Besonders wird angenommen, dass der Blattwinkel in einem Bereich kleiner Windgeschwindigkeiten, also bevor der vorbestimmte Betriebszustand erreicht wird, nur eine geringe Belastung erfährt und etwaige Veränderungen des Blattes vernachlässigt werden können. Nimmt nun der Wind weiter zu, wobei sich die Windenergieanlage noch immer im Teillastbetrieb befindet, kann das Blatt beispielsweise tordieren, um dies als einfache Erklärung zugrunde zu legen.

Das Rotorblatt weist eine Blattwurzel auf, mit der es an der Rotornabe befestigt ist. Die Blattwurzel liegt nach innen zur Rotornabe und damit zur Drehachse des Rotors. Zur anderen Seite hin weist das Rotorblatt nach außen eine Blattspitze auf. Bei der beispielhaft genannt Torsion verändert somit das Rotorblatt einen Blattwinkel im Bereich der Rotorblattspitze relativ zu einem Blattwinkel im Bereich der Rotorblattwurzel. Die Messung des Blattwinkels als Grundlage für das Verstellen des Rotorblattwinkels erfolgt üblicherweise im Wurzelbereich, denn auch dort sind die Verstellantriebe für den Blattwinkel, also die sogenannten Pitchantriebe.

Es kann nun durch die Verstellung des Blattwinkels im Wurzelbereich der Veränderung des Blattwinkels an der Blattspitze entgegengewirkt wird. Vereinfacht ausgedrückt wurde erkannt, dass bei entsprechend höheren Windlasten im Teillastbetrieb der Blattwinkel im Bereich der Blattspitze in Richtung Fahnenstellung gedrückt und damit vergrößert wird und dass durch Verstellung des Blattwinkels in die entgegengesetzte Richtung, nämlich eine Verkleinerung des Blattwinkels, gegengesteuert werden kann.

Dabei liegt auch die Erkenntnis zugrunde, dass ein ganz wesentlicher Teil der Leistung im äußeren Bereich des Rotors erzeugt wird und auch dort ein möglichst guter Betrieb der Windenergieanlage sichergestellt werden sollte. Sollte die Stellung des Rotorblatts im Bereich der Blattwurzel dadurch verschlechtert werden, kommt es darauf weniger an, als auf eine möglichst gute Einstellung des Blattes im Bereich der Blattspitze, zumindest im äußersten Drittel des Rotorblattes zur Blattspitze hin.

Dabei wird vorsorglich darauf hingewiesen, dass dieses Differenzieren in unterschiedliche Blattwinkel der Erläuterung dient, ohne dadurch die Definition des Blattwinkels zu verändern, nämlich die Stellung des Blatts im Wurzelbereich. Schließlich wird trotz Torsion durch die Verstellung des Blattwinkels im Wurzelbereich das gesamte Blatt verstellt.

Gemäß einer Ausführungsform wird daher auch vorgeschlagen, den Blattwinkel gegenüber dem Teillastwinkel zu verstellen, nämlich abhängig einer Torsion wenigstens eines der Rotorblätter um seine Blattlängsachse. Es kann hier beispielsweise die Torsion des Rotorblattes gemessen werden und diese Torsionsmessung den Eingang einer Blattwinkelregelung bilden. Auch hierbei kann zunächst der Blattwinkel im Teillastbetrieb unverändert bleiben, nämlich den Teillastwinkel aufweisen. Es kann hierbei bei einer Windenergieanlage mit mehreren, insbesondere drei Rotorblättern dennoch nur die Torsion eines Blattes erfasst werden und davon abhängig könnten die Blattwinkel aller Blätter wie vorgeschlagen verändert werden. Eine Optimierung könnte durch eine individuelle Verstellung des Blattwinkels jedes einzelnen Rotorblattes erzielt werden, was aufgrund eines zu erwartenden Aufwandes allerdings üblicherweise nicht die favorisierte Lösung wäre, gleichwohl nicht ausgeschlossen werden soll.

Diese Torsion des Rotorblattes kann durch andere Betriebsparameter bestimmt werden, was gemäß einer Ausführungsform vorgeschlagen wird. Beispielsweise kann zu einer Drehzahlleistungskennlinie auch eine Torsion hinterlegt sein, die sich erfahrungsgemäß einstellt. Eine solche hinterlegte Torsionskurve kann beispielsweise vorher aufgenommen werden oder einmalig für den Anlagentyp bestimmt werden. Es kommt auch in Betracht, weitere Parameter mit einzubeziehen, wie beispielsweise die Windgeschwindigkeit oder andere Eigenschaften des aktuellen Windes oder der Luft, einschließlich Luftdichte und Feuchtigkeit. Zu solchen Eigenschaften des Windes gehört auch eine Variation der Windgeschwindigkeit über die Höhe, was auch als Wind-Shear bezeichnet werden kann. Eine Eigenschaft des Windes, die berücksichtigt werden kann, ist auch eine Variation der Windrichtung mit der Höhe, die auch als Wind-Veer bezeichnet wird.

Eine Torsion des Rotorblattes kann auch durch Verwendung mehrerer, entlang des Rotorblattes verteilter Messsensoren erfasst werden.

Vorzugsweise erfolgt das Verstellen abhängig einer Blattbelastung. Eine solche Blattbelastung kann dafür bspw. messtechnisch erfasst werden. Eine Möglichkeit wäre, eine Biegung des Rotorblattes mittels eines Dehnungsmessstreifens (DMS) zu erfassen und von der erfassten Biegung auf die Belastung zu schließen. Um von einer Biegung auf eine Belastung zu schließen, kann ein vorher für das betreffende Rotorblatt oder den betreffenden Rotorblatttyp aufgenommener Zusammenhang verwendet werden. Eine solche Belastung kann auch Aufschluss über die anzunehmende Torsion geben, auch wenn die Belastungsmessung eine Dehnung entlang einer Längsachse betrifft. Hier liegt die Erkenntnis zugrunde, dass eine solche Belastung in Längsrichtung durch entsprechend starken Wind hervorgerufen wird, und derselbe Wind auch zu einer Torsion führt.

Erfindungsgemäß wird im Teillastbetrieb eine Leistung in Abhängigkeit einer Drehzahl eingestellt. Das kann beispielsweise basierend auf einer bekannten Drehzahl-Leistungskennlinie erfolgen. Zu dieser Art der Regelung im Teillastbetrieb wird nun vorgeschlagen, ab einer vorbestimmten Drehzahl den Blattwinkel gegenüber dem Teillastwinkel zu verstellen, nämlich zu verringern. Dadurch, dass die Leistung in Abhängigkeit der Drehzahl eingestellt wird, stellen sich jeweils Betriebspunkte ein, die eine recht zuverlässige Aussage über den Zustand der Windenergieanlage zulassen, einschließlich über die Torsion der Rotorblätter. Deshalb kann in diesem Fall aus der Drehzahl, die sich einstellt, sehr gut auf die Torsion der Rotorblätter zurückgeschlossen werden und entsprechend die Verstellung des Blattwinkels vorgenommen werden. Ähnliches gilt für die Leistung, die bei der Regelung über die Drehzahl-Leistungskennlinie ebenfalls einen Rückschluss auf den Zustand der Windenergieanlage zulässt.

Der Blattwinkel wird mit weiter steigender Drehzahl bzw. weiter steigender Leistung in Abhängigkeit der Drehzahl bzw. in Abhängigkeit der Leistung verstellt. Steigt also die Drehzahl über diese vorbestimmte Drehzahl hinaus weiter an, wird vorgeschlagen, den Blattwinkel weiter zu verstellen. Entsprechendes wird vorgeschlagen, wenn der Blattwinkel ab einer vorbestimmten Leistung verstellt wird.

Erfindungsgemäß wird dabei der Blattwinkel vor Erreichen des Vollastbetriebs auf den Teillastwinkel zurückgestellt wird.

Insbesondere geht die Regelung gemäß dieser, aber vorzugsweise auch gemäß der übrigen Ausführungsformen, davon aus, dass ein fester Teillastwinkel hinterlegt ist. Dieser bildet somit die Ausgangslage und Grundlage für die Regelung im Teillastbetrieb. Davon wird nun abhängig von bestimmten Kriterien gezielt abgewichen. Wird der Vollastbetrieb erreicht und steigt die Windgeschwindigkeit weiter an, wird der Blattwinkel vergrößert, nämlich in Richtung zur Fahnenstellung hin. Das Zurückstellen des Blattwinkels, der im Teillastbetrieb verringert wurde, auf den Teillastwinkel, ist somit bereits eine Verstellung zur Fahnenstellung hin und das wird vorzugsweise zum Ende des Teillastbetriebs vorgeschlagen. Im Vollastbetrieb kann dann bei weiter steigender Windgeschwindigkeit der Blattwinkel weiter in Richtung Fahnenstellung verstellt werden.

Gemäß einer Ausführungsform wird vorgeschlagen, dass der Blattwinkel gegenüber dem Teillastwinkel so stark verringert wird, dass er einen negativen Wert annimmt. Beispielsweise kann der Teillastwinkel den Wert 5° aufweisen und der Blattwinkel kann im Teillastbetrieb auf einen Wert von -2° verringert werden. Ein weiteres, weniger extremes Beispiel wäre, wenn der Teillastwinkel einen Wert von 3° aufweist und der Blattwinkel dann im Teillastbetrieb auf einen Wert von -1° verringert wird. Hintergrund dieser Ausführungsform ist, dass erkannt wurde, dass eine Blattwinkelverringerung sogar in einem solch starken Maße sinnvoll sein kann. Insbesondere dass eine Torsion in entsprechender Größenordnung auftreten kann und dass diese Torsion des Rotorblattes auch trotz ihr entgegen gerichteter Verstellung des Rotorblattes beibehalten wird. Diese Ausführungsform unterstreicht auch, dass das erfindungsgemäße Verringern des Rotorblattwinkels besonders über ein minimales Nachjustieren des Blattwinkels aus anderen Gründen, wie beispielsweise dem Ausgleichen einer Ungenauigkeit, hinausgeht.

Vorzugsweise wird ein Verfahren vorgeschlagen, bei dem der Teillastbetrieb in wenigstens zwei Bereiche aufgeteilt wird, nämlich in einen unteren Bereich und in einen oberen Bereich. Der untere Bereich ist derjenige bei geringerer Windgeschwindigkeit und der obere entsprechend bei höherer Windgeschwindigkeit. Dabei wird im Teillastbetrieb in dem unteren Bereich der Teillastwinkel verwendet, also nicht verstellt. Erst im oberen Bereich des Teillastbetriebs wird dann der Blattwinkel gegenüber dem Teillastwinkel verringert. Im sich anschließenden Vollastbetrieb wird dann der Blattwinkel gegenüber dem Teillastwinkel erhöht. Somit werden wenigstens drei Bereich klar vorgegeben, nämlich ein unterer Bereich im Teillastbetrieb, bei dem eine Blatttorsion noch keine Rolle spielt. Dann wird ein oberer Bereich im Teillastbetrieb vorgeschlagen, bei dem die Torsion des Blattwinkels eine Rolle spielen kann und dem entgegengewirkt wird. Schließlich wird im Volllastbetrieb eine Erhöhung des Blattwinkels vorgeschlagen, um die Belastung der Anlage durch den entsprechend hohen Wind zu reduzieren. Es ist also zu beachten, dass in dem oberen Bereich des Teillastbetriebs der Teillastwinkel, mit ansteigendem Wind, zumindest abschnittsweise in eine Richtung verstellt wird, die der Richtung im Vollastbetrieb entgegen gerichtet ist.

Dabei muss das Verringern des Blattwinkels im oberen Bereich des Teillastbetriebs nicht bis exakt an den Vollastbetrieb heran erfolgen und auch im Volllastbetrieb muss nicht die Erhöhung des Blattwinkels über den Teillastwinkel hinaus sofort direkt anschließend an den oberen Bereich des Teillastbetriebs erfolgen. Vorzugsweise wird ein Übergangsbereich zwischen oberem Bereich des Teillastbetriebs und Volllastbetrieb vorgeschlagen, in dem der Blattwinkel von seinem gegenüber dem Teillastwinkel verringerten Wert zu dem gegenüber dem Teillastwinkel erhöhten Wert überführt wird, vorzugsweise in Abhängigkeit der Windgeschwindigkeit.

Besonders wird vorgeschlagen, dass der Blattwinkel bereits zum Ende des Teillastbetriebs und damit zum Ende des oberen Bereichs des Teillastbetriebs erhöht wird. Vorzugsweise wird vorgeschlagen, dazu im Teillastbereich einen dritten Bereich zu definieren, der zwischen dem oberen Bereich des Teillastbetriebs und dem Volllastbetrieb als Teil des Teillastbetriebs vorgesehen ist. Vorzugsweise kann dieser dritte Bereich des Teillastbetriebs als Übergangsbereich zum Volllastbetrieb verwendet werden.

Zu diesem dritten Bereich im Teillastbetrieb wird vorgeschlagen, dass der Blattwinkel in dem dritten Bereich des Teillastbetriebs erhöht wird, insbesondere mit steigender Windgeschwindigkeit.

Ein solcher Übergangsbereich muss aber nicht vorgesehen sein oder kann im Bereich der Nennwindgeschwindigkeit liegen. Gemäß einer Variante kann der Blattwinkel bis zur Nennwindgeschwindigkeit auf einen kleinen Blattwinkel verringert werden, um dann von diesem kleinen Blattwinkel aus mit weiter steigender Windgeschwindigkeit auf einen Wert bis zum Teillastwinkel anzusteigen. Dann oder dafür kann die Drehzahlregelung die Blattverstellung übernehmen, die den Blattwinkel zum Steuern der Drehzahl verstellt, die nämlich den Blattwinkel mit ansteigender Windgeschwindigkeit vergrößert, um dadurch möglichst Nenndrehzahl, oder einen anderen Drehzahlwert, zu halten.

Vorzugsweise wird der Blattwinkel im Teillastbetrieb, jedenfalls im oberen Bereich des Teillastbetriebs, in Abhängigkeit der Leistung eingestellt, wohingegen der Blattwinkel im Volllastbetrieb in Abhängigkeit der Drehzahl eingestellt wird.

Gemäß einer Ausführungsform wird vorgeschlagen, dass die Verringerung des Blattwinkels basierend auf einem vorgegebenen Zusammenhang besonders in Abhängigkeit der Drehzahl und/oder in Abhängigkeit der Leistung verändert wird. Dieser Zusammenhang kann vorzugsweise durch einen Gradienten vorgegeben werden.

Dadurch kann besonders erreicht werden, dass diese Verringerung des Blattwinkels nicht sprunghaft, sondern allmählich erfolgt. In diesem Gradienten können auch zuvor bestimmte Kenntnisse über das Torsionsverhalten des Rotorblattes einfließen.

Eine solche drehzahl- oder leistungsabhängige Veränderung des Blattwinkels kann durch den Gradienten, durch eine entsprechende Funktion oder aber auch durch eine hinterlegte Tabelle, einen sogenannten Lookup-Table, realisiert werden. Selbst durch den Lookup-Table kann durch entsprechend viele Werte eine quasi kontinuierliche Veränderung auf einfache Art und Weise erreicht werden.

Gemäß einer Ausführungsform wird vorgeschlagen, dass der Blattwinkel im Teillastbetrieb gegenüber dem Teillastwinkel in Abhängigkeit einer Charakteristik des Windes, insbesondere in Abhängigkeit einer Böigkeit des Windes verstellt wird.

Es wird somit vorgeschlagen, die Böigkeit und außerdem oder alternativ eine Böenhäufigkeit des vorherrschenden Windes mit in das Verfahren einzubeziehen. Eine mögliche Definition einer Böe wäre, wenn der gemessene 1-Minuten-Mittelwert der Windgeschwindigkeit innerhalb weniger Sekunden, bspw. maximal 20 Sekunden und mindestens 3 Sekunden anhaltend, um mindestens 3 m/s überschritten wird. Eine Böe kann auch über einen Vergleich der aktuellen Windgeschwindigkeit mit einem 10-Minuten-Mittel vorgenommen werden, wobei dann ein geringeres Überschreiten, z.B. im Bereich von 1,7m/s als Böe angesehen werden kann. Entsprechend kann eine Böe festgestellt werden und damit ist es auch möglich, Böen zu zählen und somit ihre Häufigkeit, also Vorkommen pro Zeitintervall zu bestimmen.

Das Verringern des Blattwinkels wirkt vorzugsweise einer Torsion des Rotorblattes aufgrund der herrschenden Windlast, bzw. einer Veränderung eines lokalen Anstellwinkels dadurch, entgegen. Besonders die bisherigen Erläuterungen haben, bis auf einige genannte Ausnahmen, ideale, insbesondere konstante Windverhältnisse vorausgesetzt. Tatsächlich ist das Verhalten des Windes komplexer und beispielsweise kann der Wind mehr oder weniger häufig, mehr oder weniger stark Böen aufweisen. Besonders dann, wenn starke Böen vorhanden sind, besteht die Gefahr, dass der Wind recht stark ist und die Windenergieanlage sich, gleichwohl noch im Teillastbetrieb, mit recht hoher Drehzahl dreht und entsprechend viel Leistung erzeugt. Wenigstens einige vorbeschriebene Ausführungsformen könnten dann eine Verringerung des Blattwinkels vornehmen.

Ergibt sich aber diese genannte hohe Drehzahl mit hoher Leistung bei einem stark böigen Wind, wird es dazwischen Bereiche mit sehr schwachem Wind geben, in denen sich auch das Rotorblatt wieder zurücktordieren kann, zumindest teilweise. Besonders, wenn das Blatt aufgrund einer Böe schlagartig zurück tordiert und die Pitchregelung zunächst nicht reagiert, und somit negative Blattwinkel vorliegen, dann steigen die lokalen effektiven Anstellwinkel weiter und es besteht die Gefahr der Strömungsablösung. Aus diesem Grund ist bei starker Böigkeit die Verringerung der Pitchwinkel abzumildern.

Entsprechend wird die genannte Verstellung des Blattwinkels in Abhängigkeit der Böigkeit des Windes vorgeschlagen. Besonders wird vorgeschlagen, die Verringerung des Blattwinkels umso zurückhaltender, also umso weniger durchzuführen, je böiger der Wind ist. Ist die Böigkeit hingegen gering, ist auch die Gefahr lokaler Flauten gering, so dass die Blattwinkelverringerung stärker vorgenommen werden kann als bei stark böigem Wind.

Dabei kommen auch andere Charakteristika des Windes in Betracht, wie beispielsweise ein stark drehender Wind. Auch in einem solchen Fall sollte eine Blattwinkelverringerung weniger stark ausfallen.

Vorzugsweise wird vorgeschlagen, den Blattwinkel umso weniger zu verringern, je stärker der Wind von einer idealen Windcharakteristik abweicht. Vorzugsweise wird dafür ein Stabilitätsfaktor vorgeschlagen, der beispielsweise Werte von 0 bis 1 annehmen kann, wobei der Wert 1 einen stabilen, also idealen Wind angibt, und der Wert 0 einen in jeder Hinsicht unstetigen Wind, also einen Wind mit hoher Böigkeit und starkem Richtungswechsel, starkem Shear und starkem Veer, um nur ein paar Beispiele zu nennen. Die Verringerung des Blattwinkels hängt dann von diesem Stabilitätsfaktor ab. Insbesondere wird vorgeschlagen, die idealerweise vorgesehene Verstellung des Blattwinkels, die also noch keine Böigkeit berücksichtigt, mit dem Stabilitätsfaktor zu multiplizieren.

Vorzugsweise wird vorgeschlagen, dass der Blattwinkel im Teillastbetrieb gegenüber dem Teillastwinkel in Abhängigkeit wenigstens einer Eigenschaft der Luft verstellt wird. Beispielsweise kann die Verstellung in Abhängigkeit der Luftdichte vorgesehen sein, besonders so, dass der Blattwinkel um so weniger verringert wird, je geringer die Luftdichte ist. Hierzu wurde erkannt, dass geringere Luftdichten zu erhöhten effektiven Blattwinkeln führen können.

Außerdem oder alternativ kann vorgesehen sein, einen Umkehrpunkt festzulegen, bei dem die Verringerung des Blattwinkels wieder zurückgenommen wird. Vorzugsweise wird dieser Umkehrpunkt in Abhängigkeit des Charakteristik des Windes ausgewählt. Insbesondere wird der Umkehrpunkt in Abhängigkeit der Windgeschwindigkeit früher angesetzt, wenn eine starke Böigkeit vorliegt.

Außerdem oder alternativ kann der Übergang vom oberen Bereich im Teillastbetrieb zum dritten Bereich im Teillastbetrieb in Abhängigkeit einer Charakteristik des Windes verändert werden. Auch dadurch wird letztlich beeinflusst, wann die Verringerung des Blattwinkels wieder zurückgenommen wird. Gegebenenfalls wird dadurch auch erreicht, dass die Verringerung des Blattwinkels insgesamt schwächer ausfällt.

Es ist hierbei, besonders beim Verschieben des Umkehrpunktes bzw. beim Verschieben der Grenzen von oberen zu dritten Bereichen, zu beachten, dass schwächere Winde nicht unbedingt aber üblicherweise dazu neigen, in ihrem Verhalten auch stabiler zu sein. Entsprechend kann eine Blattwinkelverringerung bei schwächeren Winden vorteilhaft bzw. weniger kritisch sein, als bei stärkeren Winden also stärkeren bzw. höheren Windgeschwindigkeiten.

Gemäß einer Ausführungsform wird vorgeschlagen, dass Messmittel zum Erfassen einer Torsion wenigstens eines der Rotorblätter um ihre Längsachse vorgesehen sind und die so erfasste Torsion als Kriterium zum Verstellen des Blattwinkels verwendet wird. Insbesondere wird vorgeschlagen, dass der Blattwinkel stärker verstellt wird, je größer die erfasste Torsion ist.

Durch die Erfassung der Torsion kann ein zuverlässiges Maß angenommen werden, das als Kriterium für die Verringerung des Blattwinkels dienen kann. Hierdurch kann der erhöhte Aufwand für das Vorsehen solcher Sensoren gerechtfertigt werden. Vorzugsweise werden solche erfassten Werte über die Torsion der Regelung der Windenergieanlage auch für andere Zwecke zugrunde gelegt.

Das Erfassen einer solchen Torsion kann beispielsweise über Dehnungsmessstreifen erfolgen, oder optisch durch entsprechende Kameras an dem jeweiligen Blatt oder auf der Gondel oder dem Spinner der Windenergieanlage. Vorzugsweise können auch sensible Beschleunigungssensoren die Torsionsbewegung als solche erfassen, um darauf basierend die absolute Torsion zu berechnen.

Gemäß einer Ausgestaltung wird vorgeschlagen, dass die Windenergieanlage mehrere Rotorblätter aufweist, insbesondere drei, und jedes Rotorblatt individuell und außerdem oder alternativ umlaufzyklisch verstellt wird. Dadurch kann berücksichtigt werden, dass sich jedes Rotorblatt in Bezug auf die übrigen in einer anderen Position befindet und damit regelmäßig auch anderen Windbedingungen ausgesetzt ist, was sich durch die Drehung des Rotors ständig ändert. Dem kann hierdurch Rechnung getragen werden. Vorzugsweise wird für jedes Rotorblatt vorgeschlagen, dass sich der individuelle Blattwinkel des jeweiligen Rotorblattes bzw. sein Sollwert aus einem für alle Rotorblätter gleichen Grundwinkel und einem für jedes Rotorblatt individuell vorgesehenen Zusatzwinkel zusammensetzt. Somit kann durch die Verwendung des Grundwinkels für alle Rotorblätter die grundsätzliche Funktionsfähigkeit der Windenergieanlage sichergestellt werden.

Durch die Veränderung des jeweiligen Zusatzwinkels können dann Verbesserungen implementiert werden. Insbesondere kann im Teillastbereich der Teillastwinkel als Grundwinkel verwendet werden und die vorgeschlagene Blattverringerung dadurch umgesetzt werden, dass sie jeweils den Zusatzwinkel bildet oder einen Teil des Zusatzwinkels bildet. Es kommt hierbei auch in Betracht, dass die Verringerung des Blattwinkels einen Anteil in dem Zusatzwinkel bildet, der für alle Blätter gleich ist. Besonders wenn die Torsion für jedes Rotorblatt einzeln erfasst wird, was gemäß einer Ausführungsform vorgeschlagen wird, kann davon abhängig eine individuelle Blattverringerung für jedes einzelne Rotorblatt vorgesehen sein. Diese individuelle Blattverringerung kann über diesen Zusatzwinkel realisiert werden.

Eine Zusammensetzung des Blattwinkels aus Grundwinkel und Zusatzwinkel kann auch für alle Rotorblätter der Windenergieanlage gleich sein, es kann also auch dann zum Einsatz kommen, wenn die Rotorblattwinkel nicht individuell, sondern gemeinsam bzw. synchron verstellt werden.

Gemäß einer Ausführungsform wird vorgeschlagen, dass ein Minimalblattwinkel vorgesehen ist, also insbesondere regelungstechnisch oder anderweitig vorgegeben und implementiert wird. Dieser Minimalblattwinkel ist kleiner als der Teillastwinkel und bildet eine Untergrenze für den Blattwinkel, so dass der Blattwinkel nicht kleiner als dieser Minimalblattwinkel eingestellt werden kann. Gegebenenfalls können die Blätter individuell verstellt werden, wie oben beschrieben wurde, wobei dies aber nur bis zu diesem Minimalblattwinkel erfolgen kann. Dadurch kann ein zu starkes Verringern des Blattwinkels insgesamt erreicht werden, wobei gleichzeitig eine individuelle Verstellung möglich bleibt. Erfindungsgemäß wird zudem eine Windenergieanlage vorgeschlagen, die dazu vorbereitet ist, ein Verfahren gemäß wenigstens einer der vorstehend beschriebenen Ausführungsformen einzusetzen. Vorzugsweise wird bereits bei der Dimensionierung der Windenergieanlage diese spätere Regelung berücksichtigt und dadurch können besonders leichte Rotorblätter verwendet werden, die ansonsten nicht oder schlechter verwendet werden könnten.

Nachfolgend wird die Erfindung exemplarisch anhand von Ausführungsformen unter Bezugnahme auf die begleitenden Figuren näher erläutert.
- Figur 1: zeigt eine Windenergieanlage in einer perspektivischen Ansicht.
- Figur 2: erläutert schematisch mögliche Verläufe des Blattwinkels.
- Figur 3: erläutert schematisch mögliche Leistungsverläufe.
- Figur 4: zeigt schematisch Profile eines Rotorblattes zur Erläuterung einer möglichen Torsion.

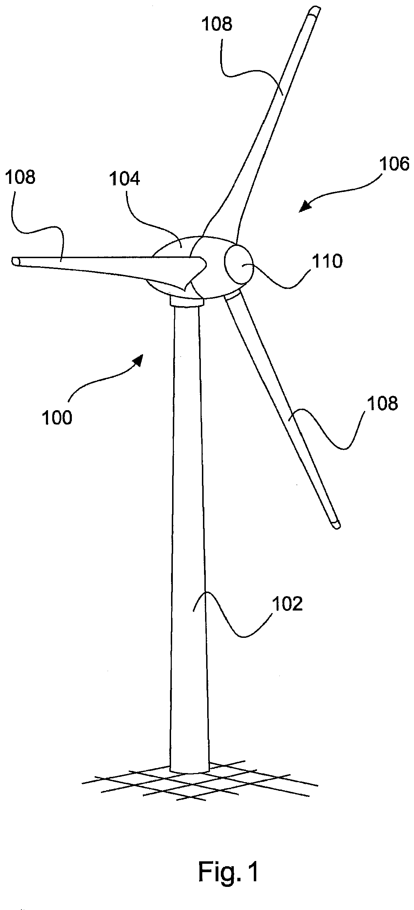

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

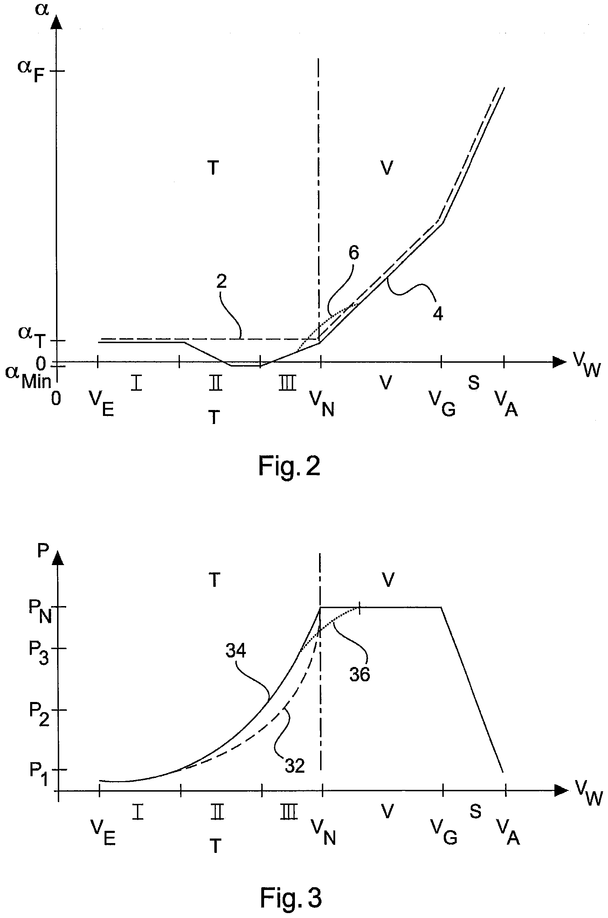

Figuren 2 und 3 erläutern mögliche Verläufe des Blattwinkels α und der Leistung P in Abhängigkeit der Windgeschwindigkeit V_{W}. Beide Figuren zeigen an ihrer Abszisse die Windgeschwindigkeit V_{W} und die Abszissen sind für beide Figuren 2 und 3 gleich. Insoweit soll auch die Darstellung der Leistung P in Figur 3 den entsprechenden Blattwinkeln α in Figur 2 zugeordnet sein, wobei diese Zuordnung nur schematisch und nicht quantitativ ist.

In Figur 2 ist nun mit der gestrichelten Linie für den Blattwinkel α ein Basisverlauf 2 gezeigt. Außerdem ist zu dem Blattwinkel α ein verbesserter Verlauf 4 mit einer durchgezogenen Linie dargestellt. Der verbesserte Verlauf 4 ist in vielen Abschnitten mit dem Basisverlauf 2 übereinstimmend und nur aus Gründen der besseren Darstellung sind diese beiden Verläufe mit geringem Abstand gezeichnet. Ein alternativer Verlauf 6 ist durch eine gepunktete Linie dargestellt und dieser Alternativverlauf 6 entspricht ansonsten dem verbesserten Verlauf 4 des Blattwinkels a.

Ausgehend von dem Basisverlauf 2 startet die Windenergieanlage bei einer Einschaltwindgeschwindigkeit V_{E} mit einem zunächst fest eingestellten Teillastwinkel α_{T}. Mit weiter steigendem Wind wird dieser Winkel bis zur Nennwindgeschwindigkeit V_{N} beibehalten. Beim Erreichen der Nennwindgeschwindigkeit V_{N} wird dann das Blatt aus dem Wind gedreht, nämlich sukzessive mit weiter steigender Windgeschwindigkeit und das bedeutet, dass der Blattwinkel α entsprechend nach und nach erhöht wird. Nur exemplarisch ist als letzter Wert für den Winkel die Fahnenstellung als α_{F} eingezeichnet.

Dieser Basisverlauf 2 zeigt somit einen konstanten Blattwinkel α mit dem Wert des Teillastwinkels α_{T} im Teillastbetrieb T und dann einen ansteigenden Wert für den Volllastbetrieb V. Der Vollständigkeit halber ist eine stärkere Steigung des Blattwinkels für den Sturmbereich S dargestellt, demnach der Blattwinkel ab Erreichen einer Grenzwindgeschwindigkeit V_{G} noch stärker erhöht wird, bis er schließlich bei einer Abschaltwindgeschwindigkeit V_{A} die Fahnenstellung, also den Winkel α_{F} erreicht. Darauf, was genau bei der Abschaltwindgeschwindigkeit V_{A} passiert und ob dann tatsächlich die Fahnenstellung erreicht wird, wie Figur 2 zeigt, kommt es hier nicht an.

Als verbesserter Verlauf 4 wird nun der mit der durchgezogenen Linie dargestellte Verlauf vorgeschlagen. Dazu wird, zur besseren Übersichtlichkeit aber auch als Orientierung für die Regelung, die das umsetzen muss, der Teillastbetrieb T in drei Abschnitte I, II und III unterteilt. Dabei bezeichnet der Abschnitt I einen unteren Bereich des Teillastbetriebs, der Abschnitt II bezeichnet einen oberen Bereich des Teillastbetriebs und Abschnitt III bezeichnet schließlich einen dritten Bereich des Teillastbetriebs, der noch, bezogen auf die Windgeschwindigkeit, oberhalb des oberen Bereichs II liegt. Diese Abschnitte können auch synonym als Bereiche bezeichnet werden. Am Ende des dritten Bereichs III, das bei der Nennwindgeschwindigkeit V_{N} liegt, beginnt der Volllastbetrieb V.

In dem unteren Bereich I stimmt der verbesserte Verlauf 4 mit dem Basisverlauf 2 überein. Am Anfang des oberen Bereichs II wird dann davon ausgegangen, dass die Windlast so stark ist, dass das Blatt signifikant tordiert und entsprechend wird durch eine Verringerung des Blattwinkels α entgegengewirkt. Der Blattwinkel α verringert sich in dieser Ausführungsform dann linear mit zunehmender Windgeschwindigkeit V_{W}. Diese Verringerung geht so weit, dass der Blattwinkel α negativ wird. Er erreicht dann einen vorgegebenen Minimalblattwinkel αₘᵢₙ, der hier entsprechend einen negativen Wert aufweist und somit wird der Blattwinkel α dann nicht weiter verringert und behält somit diesen negativen Wert bis zum Ende des oberen Bereichs II des Teillastbetriebs bei.

Am Ende des oberen Bereichs des Teillastbetriebs T wird der Blattwinkel dann wieder erhöht, nämlich in dem Beispiel linear mit dem Ansteigen des Windes bis zum Teillastwinkel α_{T}, der erreicht wird, wenn die Windgeschwindigkeit V_{W} Nennwindgeschwindigkeit V_{N} erreicht. Entsprechend wird in dieser Ausführungsform in diesem dritten Bereich III des Teillastbetriebs ein linearer Anstieg des Blattwinkels bis zum Teillastwinkel vorgeschlagen.

Beim Erreichen der Nennwindgeschwindigkeit V_{N} weist somit der Blattwinkel des verbesserten Verlaufs 4 wieder den Teillastwinkel α_{T} auf und in dem Punkt wird dann wieder die Kennlinie des Basisverlaufs 2 erreicht. Der weitere Verlauf des verbesserten Verlaufs 4 kann dann dem weiteren Verlauf des Basisverlaufs 2 entsprechen, was entsprechend in Figur 2 dargestellt ist.

Als ein alternativer Verlauf 6 wird zu dem verbesserten Verlauf 4 eine Abweichung im Übergangsbereich vom Teillastbetrieb T zum Volllastbetrieb V vorgeschlagen. Demnach wird, wie die gepunktete Kennlinie 6 andeutet, der Blattwinkel bereits gegen Ende des Teillastbetriebs, hier nämlich gegen Ende auch des dritten Bereichs des Teillastbetriebs so erhöht, dass er den Wert des Teillastwinkels überschreitet, bevor Nennwindgeschwindigkeit V_{N} erreicht wird. Hierdurch kann eine geringere Belastung in diesem kritischen Übergangsbereich erreicht werden. Dazu ist zu beachten, dass die Belastung der Blätter bei Nennwindgeschwindigkeit am größten sein kann. Bei Nennwindgeschwindigkeit liegt nämlich bereits ein recht starker Wind vor, wobei die Rotorblätter aber üblicherweise noch nicht, auch nicht zum Teil, aus dem Wind gedreht sind. Die Blätter bieten dort also die größte Angriffsfläche. Dies kann durch den vorgeschlagenen alternativen Verlauf 6 verbessert werden. Dieser verbesserte Verlauf 6 mündet dann bei etwas höherer Windgeschwindigkeit in den Basisverlauf 2 bzw. in den verbesserten Verlauf 4.

Figur 3 zeigt jedenfalls schematisch einen möglichen Leistungsverlauf, der den jeweiligen Verläufen der Blattwinkel gemäß Figur 2 zugeordnet ist.

Auch in Figur 3 ist ein Basisverlauf 32 gestrichelt dargestellt sowie mit einer durchgezogenen Linie ein verbesserter Verlauf 34 eingetragen. Auch ein alternativer Verlauf 36 ist als punktierte Kennlinie in Figur 3 eingezeichnet. Diese drei Verläufe 32, 34 und 36 entsprechen somit den Verläufen 2, 4 und 6 des Blattwinkels gemäß Figur 2, mit dem Unterschied, dass hier die Leistung dargestellt wird. Anders als in Figur 2 ist zu dem Basisverlauf 32 und dem verbesserten Verlauf 34 der Basisverlauf 32 nur eingezeichnet, soweit er sich von dem verbesserten Verlauf 34 unterscheidet.

Es ist somit grundsätzlich für den Basisverlauf 32 und den verbesserten Verlauf 34 zu erkennen, dass die Leistung bei der Einschaltwindgeschwindigkeit V_{E} zugeschaltet wird und einen geringen Wert aufweist. Die Leistung steigt dann kontinuierlich, aber immer stärker an, bis sie zum Ende des Teillastbetriebs T bei der Nennwindgeschwindigkeit V_{N} ihren Nennwert P_{N} erreicht hat. Dieser Nennwert wird dann für den Volllastbetrieb V gehalten und ab der Grenzwindgeschwindigkeit V_{G} reduziert und erreicht zum Ende des Sturmbereichs S bei der Abschaltwindgeschwindigkeit V_{A} einen geringen Wert, der auch Null sein kann.

Figur 3 zeigt nun, dass der Basisverlauf 32 ab Beginn des oberen Bereichs II des Teillastbetriebs T abweicht, nämlich eine etwas geringere Leistung aufweist. Zunächst ist aber zu erkennen, dass dies Abweichung bei einem Leistungswert P₁ beginnt. Dieser Leistungswert P₁ kann somit als vorbestimmte Leistung dienen, ab der die Verringerung des Blattwinkels, die zum verbesserten Verlauf 4 in Figur 2 gezeigt ist, beginnt.

Erreicht die Leistungskurve des verbesserten Verlaufs 34 den zweiten vorbestimmten Leistungswert P₂, kann dies als Information ausgewertet bzw. zugrunde gelegt werden, dass das Ende des oberen Bereichs II des Teillastbetriebs erreicht ist und der Blattwinkel wieder erhöht werden soll, wie es in Figur 2 dargestellt ist. Entsprechend wird der Blattwinkel im dritten Bereich III des Teillastbetriebs T wieder erhöht und erreicht den Teillastwinkel α_{T} bei Nennwindgeschwindigkeit. Entsprechend fallen dann der Basisverlauf 32 und der verbesserte Verlauf 34 auch hinsichtlich der erzeugten Leistung P wieder zusammen.

An dieser Figur 3 ist zu erkennen, dass durch die vorgeschlagene Verringerung des Blattwinkels die Leistungsausbeute mitunter noch erhöht werden kann. Es ist aber auch zu erkennen, dass sich hier zusätzlich Vorteile im Verlauf der Leistung ergeben können. Besonders zum Ende des Teillastbetriebs T ist der Anstieg der Leistung sehr steil. Das bedeutet, dass geringe Änderungen der Windgeschwindigkeit zu großen Änderungen der Leistung führen können. In der praktischen Umsetzung kann dies bedeuten, dass geringe Änderungen der Drehzahl zu starken Änderungen der Leistung führen können. Das kann regelungstechnische Probleme aufwerfen und die vorgeschlagene Verringerung und dann wieder Erhöhung des Blattwinkels kann, auch je nach konkret gewählten Werten, zu einem nicht ganz so steilen Anstieg der Leistung P in diesem Bereich führen.

Der alternative Verlauf 36 für die Leistung P zeigt in Figur 3, dass in dem Übergangsbereich von Teillastbetrieb T zu Volllastbetrieb V die Leistung gegenüber dem verbesserten Verlauf 34 als auch gegenüber dem Basisverlauf 32 etwas verringert sein kann. Dafür ist aber in diesem speziellen Bereich die Belastung der Blätter reduziert und auch der Anstieg der Leistung P kann in diesem Bereich nochmals reduziert sein, was für die Umsetzung der Regelung vorteilhaft sein kann.

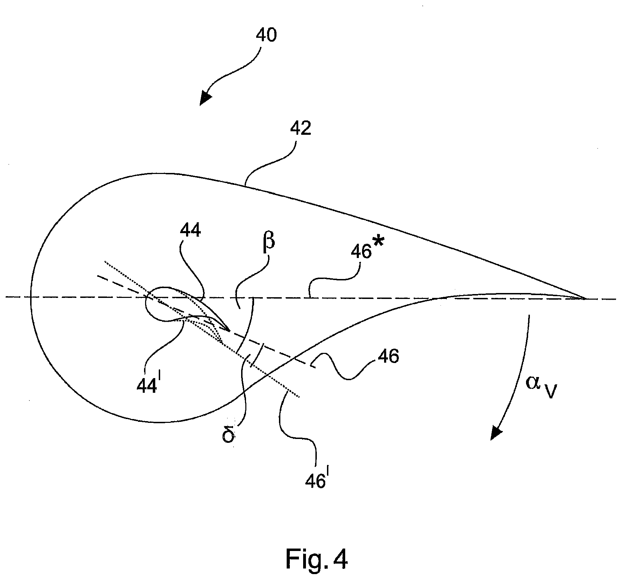

Figur 4 zeigt nun im Grunde zwei Profile 42 und 44 eines Rotorblatts 40. Das erste Profil 42 ist in der Nähe der Blattwurzel und das zweite Profil 44 ist in der Nähe der Blattspitze. Auch hier sind die Profile auch in ihrer Größe nur schematisch dargestellt. Zu dem zweiten Profil 44 ist auch ein Ruheprofil 44' punktiert eingezeichnet. Das zweite Profil 44 und das Ruheprofil 44' sind identisch, mit dem Unterschied, dass das zweite Profil 44 gegenüber dem Ruheprofil 44' aufgrund einer Torsion in dem Rotorblatt 40 verdreht ist. Dies ist als Torsionswinkel δ eingezeichnet. Als Referenzausrichtung wurde hier für jedes der Profile etwa eine Skelettlinie 46, 46' bzw. 46* zugrunde gelegt.

Jedenfalls ist der Figur 4 zu entnehmen, dass das Rotorblatt 40 in seiner Ruhelage, also wenn es bereits fertiggestellt im Werk liegt, einen Verdrehungswinkel β zwischen dem ersten Profil 42 im Wurzelbereich und dem zweiten Profil 44 bei der Blattspitze aufweist. Figur 4 zeigt insoweit einen Betriebspunkt, bei dem das Rotorblatt 40 im Einsatz ist und der Wind zu einer Torsion geführt hat, demnach das zweite Profil 44 um den Torsionswinkel δ gegenüber dem Ruheprofil 44', also dem zweiten Profil 44 in Ruhelage, verdreht ist. Das Blatt 40 ist also tordiert und führt zu dieser Winkelabweichung gemäß δ. Diese Situation kann beispielsweise bezogen auf Figur 2 dem Zustand am Ende des oberen Bereichs II oder am Anfang des dritten Bereiches III des Teillastbetriebs T entsprechen.

Figur 4 verdeutlicht insoweit auch, dass diese Torsion des Rotorblatts durch die Windbelastung dazu führt, dass das Rotorblatt 40 besonders im Bereich seiner Rotorblattspitze etwas mehr in Richtung zur Fahnenstellung α_{F} verdreht ist. Die Verdrehung in Fahnenstellung ist eine Erhöhung des Blattwinkels und es wird somit vorgeschlagen, den Blattwinkel zu verringern, um dem entgegenzuwirken. Diese Verringerungsrichtung ist als α_{V} in Figur 4 mit einem entsprechenden Pfeil zur Verdeutlichung eingezeichnet. Auf die Länge dieses Pfeils α_{V} kommt es hier nicht an.

Durch das vorgeschlagene Verfahren kann somit Effekten durch die Blatttorsion im Betrieb, die in Figur 4 dargestellt ist, entgegengewirkt werden. Dieses Entgegenwirken veranschaulicht besonders der verbesserte Verlauf 4 des Blattwinkels α gemäß Figur 2 und die dem Grunde nach resultierenden Leistungsverläufe sind dazu der Figur 3 zu entnehmen.

## Patentansprüche

1. Verfahren zum Steuern einer Windenergieanlage mit Rotorblättern (40) mit verstellbarem Blattwinkel,
umfassend die Schritte
- Betreiben der Windenergieanlage in einem Teillastbetrieb (T) für Windgeschwindigkeiten (V_{W}) bis zu einer Nennwindgeschwindigkeit (V_{N}), wobei im Teillastbetrieb (T) für den Blattwinkel (α) ein fester Teillastwinkel (α_{T}) vorgesehen ist,
- Betreiben der Windenergieanlage in einem Volllastbetrieb (V) für Windgeschwindigkeiten (V_{W}) oberhalb der Nennwindgeschwindigkeit (V_{N}), wobei im Volllastbetrieb (V) der Blattwinkel (α) mit zunehmender Windgeschwindigkeit (V_{W}) vergrößert wird und Werte oberhalb des Teillastwinkels (α_{T}) aufweist,
weiterhin umfassend die Schritte
- dass im Teillastbetrieb (T) eine Leistung in Abhängigkeit der Drehzahl eingestellt wird und ab einer vorbestimmten Drehzahl und/oder ab einer vorbestimmten Leistung der Blattwinkel (α) gegenüber dem Teillastwinkel (α_{T}) verringert wird, und
- dass der Blattwinkel (α) mit weiter steigender Drehzahl bzw. weiter steigender Leistung in Abhängigkeit der Drehzahl bzw. der Leistung verstellt wird, so dass der Blattwinkel (α) vor Erreichen des Volllastbetriebs (V) auf den Teillastwinkel (α_{T}) zurückgestellt wird.

2. Verfahren nach Anspruch 1, **dadurch gekennzeichnet, dass** im Teillastbetrieb (T) der Blattwinkel (α) gegenüber dem Teillastwinkel (α_{T}) abhängig einer Torsion wenigstens eines der Rotorblätter um eine Blattlängsachse und/oder abhängig einer Blattbelastung verstellt wird.

3. Verfahren nach einem der vorstehenden Ansprüche, **dadurch gekennzeichnet, dass** der Blattwinkel (α) gegenüber dem Teillastwinkel (α_{T}) so stark verringert wird, dass er einen negativen Wert annimmt.

4. Verfahren nach einem der vorstehenden Ansprüche, **dadurch gekennzeichnet, dass** mit zunehmender Windgeschwindigkeit (V_{W}) der Blattwinkel (α)
- im Teillastbetrieb (T) in einem unteren Bereich zunächst den Teillastwinkel (α_{T}) aufweist,
- im Teillastbetrieb (T) in einem oberen Bereich gegenüber dem Teillastwinkel (α_{T}) verringert wird und
- im Volllastbetrieb (V) gegenüber dem Teillastwinkel (α_{T}) erhöht wird.

5. Verfahren nach Anspruch 4, **dadurch gekennzeichnet, dass** im Teillastbetrieb (T) im Anschluss an den oberen Bereich (II) ein dritter Bereich (III) vorgesehen ist, an den sich der Volllastbetrieb anschließt und in dem der Blattwinkel (a) wenigstens bis zum Teillastwinkel (α_{T}) erhöht wird.

6. Verfahren nach einem der vorstehenden Ansprüche, **dadurch gekennzeichnet, dass** der Blattwinkel (α) in einem bzw. dem oberen Bereich (II) im Teillastbetrieb (T) in Abhängigkeit der Leistung und/oder in Abhängigkeit der Drehzahl mit einem vorbestimmten Gradienten und/oder in Abhängigkeit eines vorbestimmten Zusammenhangs von der Leistung bzw. Drehzahl verringert wird.

7. Verfahren nach einem der vorstehenden Ansprüche, **dadurch gekennzeichnet, dass** der Blattwinkel (α) im Teillastbetrieb (T) gegenüber dem Teillastwinkel (α_{T}) in Abhängigkeit wenigstens einer Eigenschaft der Luft, insbesondere in Abhängigkeit der Luftdichte und/oder in Abhängigkeit einer Charakteristik des Windes, insbesondere in Abhängigkeit einer Böigkeit des Windes verstellt wird.

8. Verfahren nach einem der vorstehenden Ansprüche, **dadurch gekennzeichnet, dass** Messmittel zum Erfassen einer Torsion wenigstens eines der Rotorblätter um ihre Längsachse vorgesehen sind und die so erfasste Torsion als Kriterium zum Verstellen des Blattwinkels (α) verwendet wird, insbesondere, dass der Blattwinkel (α) je stärker verstellt wird, je größer die erfasste Torsion ist.

9. Verfahren nach einem der vorstehenden Ansprüche, **dadurch gekennzeichnet, dass** die Windenergieanlage mehrere Rotorblätter aufweist, insbesondere drei, und jedes Rotorblatt individuell und/oder umlaufzyklisch verstellt wird, insbesondere so, dass sich der individuelle Blattwinkel (a) bzw. sein Sollwert aus einem für alle Rotorblätter gleichen Grundwinkel und einem für jedes Rotorblatt individuell vorgesehenen Zusatzwinkel zusammensetzt.

10. Verfahren nach einem der vorstehenden Ansprüche, **dadurch gekennzeichnet, dass** ein Minimalblattwinkel (αₘᵢₙ) vorgesehen ist, der kleiner als der Teillastwinkel (α_{T}) ist und der Blattwinkel (α), ggf. für jedes Rotorblatt individuell, bis zu diesem Minimalblattwinkel (αₘᵢₙ) verstellt werden kann.

11. Windenergieanlage mit einem Rotor, der Rotorblätter aufweist, deren Blattwinkel verstellbar ist, sowie mit Mitteln, die dazu eingerichtet sind, um
- die Windenergieanlage in einem Teillastbetrieb (T) für Windgeschwindigkeiten (V_{W}) bis zu einer Nennwindgeschwindigkeit (V_{N}) zu betreiben, wobei im Teillastbetrieb (T) für den Blattwinkel (α) ein fester Teillastwinkel (α_{T}) vorgesehen ist,
- die Windenergieanlage in einem Volllastbetrieb (V) für Windgeschwindigkeiten (V_{W}) oberhalb der Nennwindgeschwindigkeit (V_{N}) zu betreiben, wobei im Volllastbetrieb (V) der Blattwinkel (α) mit zunehmender Windgeschwindigkeit (V_{W}) vergrößert wird und Werte oberhalb des Teillastwinkels (α_{T}) aufweist,
sowie mit Mitteln, die dazu eingerichtet sind, um
- im Teillastbetrieb (T) eine Leistung in Abhängigkeit der Drehzahl einzustellen und ab einer vorbestimmten Drehzahl und/oder ab einer vorbestimmten Leistung den Blattwinkel (α) gegenüber dem Teillastwinkel (α_{T}) zu verringern, und
- den Blattwinkel (α) mit weiter steigender Drehzahl bzw. weiter steigender Leistung in Abhängigkeit der Drehzahl bzw. der Leistung zu verstellen, um den Blattwinkel (α) vor Erreichen des Volllastbetriebs (V) auf den Teillastwinkel (α_{T}) zurückzustellen.

## Claims

1. A method for controlling a wind turbine having rotor blades (40) with an adjustable blade angle,
comprising the steps
- operating the wind turbine in a partial load mode (T) for wind velocities (Vw) up to a nominal wind velocity (V_{N}), wherein in the partial load mode (T), a fixed partial load angle (α_{T}) is provided for the blade angle (α),
- operating the wind turbine in a full load mode (V) for wind velocities (V_{W}) above the nominal wind velocity (V_{N}), wherein in the full load mode (V) the blade angle (α) is enlarged with increasing wind velocity (V_{W}) and has values above the partial load angle (α_{T}),
further comprising the steps
- that in the partial load mode (T), a power is set as a function of the rotational speed and, starting from a predetermined rotational speed and/or starting from a predetermined power, the blade angle (α) is reduced as compared with the partial load angle (α_{T}), and
- that the blade angle (α) is adjusted as the rotational speed rises further or as the power rises further as a function of the rotational speed or the power, so that the blade angle (α) is reset to the partial load angle (α_{T}) before the full load mode (V) is reached.

2. The method as claimed in claim 1, **characterized in that** in the partial load mode (T), the blade angle (α) is adjusted as compared with the partial load angle (α_{T}) as a function of torsion of at least one of the rotor blades about a blade longitudinal axis and/or as a function of a blade loading.

3. The method as claimed in one of the preceding claims, **characterized in that** the blade angle (α) is reduced so highly as compared with the partial load angle (α_{T}) that it assumes a negative value.

4. The method as claimed in one of the preceding claims, **characterized in that**, as the wind velocity (V_{W}) increases, the blade angle (α)
- in the partial load mode (T) initially has the partial load angle (α_{T}) in a lower range,
- in the partial load mode (T) is reduced as compared with the partial load angle (α_{T}) in an upper range, and
- in the full load mode (V), is increased as compared with the partial load angle (α_{T}).

5. The method as claimed in claim 4, **characterized in that** in the partial load mode (T), following the upper range (II), a third range (III) is provided, which follows the full load mode and in which the blade angle (α) is increased at least as far as the partial load angle (α_{T}).

6. The method as claimed in one of the preceding claims, **characterized in that** in a or the upper range (II) in the partial load mode (T), the blade angle (α) is reduced as a function of the power and/or as a function of the rotational speed with a predetermined gradient and/or as a function of a predetermined relationship of the power or rotational speed.

7. The method as claimed in one of the preceding claims, **characterized in that** in the partial load mode (T), the blade angle (α) is adjusted as compared with the partial load angle (α_{T}) as a function of at least one property of the air, in particular as a function of the air density and/or as a function of a characteristic of the wind, in particular as a function of a gustiness of the wind.

8. The method as claimed in one of the preceding claims, **characterized in that** measuring means are provided to detect torsion of at least one of the rotor blades about its longitudinal axis, and the torsion thus detected is used as a criterion for adjusting the blade angle (α), in particular, the blade angle (α) is adjusted more sharply the higher the detected torsion is.

9. The method as claimed in one of the preceding claims, **characterized in that** the wind turbine has multiple rotor blades, in particular three, and each rotor blade is adjusted individually and/or cyclically in rotation, in particular such that the individual blade angle (α) or its set point is composed of a basic angle that is the same for all the rotor blades and an additional angle provided individually for each rotor blade.

10. The method as claimed in one of the preceding claims, **characterized in that** a minimum blade angle (αₘᵢₙ) is provided, which is smaller than the partial load angle (α_{T}), and the blade angle (α), can possibly be adjusted individually for each rotor blade as far as this minimum blade angle (αₘᵢₙ).

11. A wind turbine having a rotor comprising rotor blades with adjustable blade angle, as well as having means which are adapted to,
- operate the wind turbine in a partial load mode (T) for wind velocities (V_{W}) up to a nominal wind velocity (V_{N}), wherein in the partial load mode (T), a fixed partial load angle (α_{T}) is provided for the blade angle (α),
- operate the wind turbine in a full load mode (V) for wind velocities (V_{W}) above the nominal wind velocity (V_{N}), wherein in the full load mode (V) the blade angle (α) is enlarged with increasing wind velocity (V_{W}) and has values above the partial load angle (α_{T}),
as well as having means, which are adapted
- to set in the partial load mode (T) a power as a function of the rotational speed and, starting from a predetermined rotational speed and/or starting from a predetermined power, to reduce the blade angle (α) as compared with the partial load angle (α_{T}), and
- to adjust the blade angle (α) as the rotational speed rises further or as the power rises further as a function of the rotational speed or the power, in order to reset the blade angle (α) to the partial load angle (α_{T}) before the full load mode (V) is reached.

## Revendications

1. Procédé pour commander une éolienne avec des pales de rotor (40) avec un angle de pale ajustable,
comprenant les étapes
- de fonctionnement de l'éolienne dans un mode de fonctionnement en charge partielle (T) pour des vitesses de vent (V_{W}) jusqu'à une vitesse de vent nominale (V_{N}), dans lequel un angle de charge partielle (α_{T}) fixe est prévu dans le mode de fonctionnement en charge partielle (T) pour l'angle de pale (α),
- de fonctionnement de l'éolienne dans un mode de fonctionnement en pleine charge (V) pour des vitesses de vent (V_{W}) supérieures à la vitesse de vent nominale (V_{N}), dans lequel dans le mode de fonctionnement en pleine charge (V), l'angle de pale (α) est agrandi au fur et à mesure que la vitesse de vent (V_{W}) augmente et présente des valeurs supérieures à l'angle de charge partielle (αT),
comprenant par ailleurs les étapes selon lesquelles
- dans le mode de fonctionnement en charge partielle (T), une puissance est réglée en fonction de la vitesse de rotation et l'angle de pale (α) est réduit par rapport à l'angle de charge partielle (α_{T}) à partir d'une vitesse de rotation prédéfinie et/ou à partir d'une puissance prédéfinie, et
- que l'angle de pale (α) est ajusté avec une vitesse de rotation qui continue à augmenter ou une puissance qui continue à augmenter en fonction de la vitesse de rotation ou de la puissance de sorte que l'angle de pale (α) est réinitialisé sur l'angle de charge partielle (α_{T}) avant d'atteindre le fonctionnement en pleine charge (V).

2. Procédé selon la revendication 1, **caractérisé en ce que** dans le mode de fonctionnement en charge partielle (T), l'angle de pale (a) est ajusté par rapport à l'angle de charge partielle (α_{T}) en fonction d'une torsion d'au moins une des pales de rotor autour d'un axe longitudinal de pale et/ou en fonction d'une contrainte de pale.

3. Procédé selon l'une quelconque des revendications précédentes, **caractérisé en ce que** l'angle de pale (α) est diminué par rapport à l'angle de charge partielle (α_{T}) de manière si importante qu'il adopte une valeur négative.

4. Procédé selon l'une quelconque des revendications précédentes, **caractérisé en ce qu'**au fur et à mesure que la vitesse de vent (V_{W}) augmente, l'angle de pale (α)
- présente d'abord l'angle de charge partielle (α_{T}) dans une zone inférieure dans le mode de fonctionnement en charge partielle (T),
- est réduit par rapport à l'angle de charge partielle (α_{T}) dans une zone supérieure dans le mode de fonctionnement en charge partielle (T) et
- est augmenté par rapport à l'angle de charge partielle (α_{T}) dans le mode de fonctionnement en pleine charge (V).

5. Procédé selon la revendication 4, **caractérisé en ce qu'**est prévue, dans le mode de fonctionnement en charge partielle (T), dans le prolongement de la zone supérieure (II), une troisième zone (III), dans le prolongement de la laquelle se trouve le mode de fonctionnement en pleine charge et dans laquelle l'angle de pale (α) est augmenté au moins jusqu'à l'angle de charge partielle (α_{T}).

6. Procédé selon l'une quelconque des revendications précédentes, **caractérisé en ce que** l'angle de pale (α) est diminué dans une ou la zone supérieure (II) dans le mode de fonctionnement en charge partielle (T) en fonction de la puissance et/ou en fonction de la vitesse de rotation avec un gradient prédéfini et/ou en fonction d'un rapport prédéfini de la puissance ou de la vitesse de rotation.

7. Procédé selon l'une quelconque des revendications précédentes, **caractérisé en ce que** l'angle de pale (α) est ajusté, dans le mode de fonctionnement en charge partielle (T), par rapport à l'angle de charge partielle (α_{T}) en fonction d'au moins une propriété de l'air, en particulier en fonction de la densité de l'air et/ou en fonction d'une caractéristique du vent, en particulier en fonction de l'intensité des rafales de vent.

8. Procédé selon l'une quelconque des revendications précédentes, **caractérisé en ce que** sont prévus des moyens de mesure pour détecter une torsion d'au moins une des pales de rotor autour de leur axe longitudinal et la torsion ainsi détectée est utilisée en tant que critère pour ajuster l'angle de pale (α), en particulier que plus la torsion détectée est grande, plus l'ajustement de l'angle de pale (α) est important.

9. Procédé selon l'une quelconque des revendications précédentes, **caractérisé en ce que** l'éolienne présente plusieurs pales de rotor, en particulier trois, et chaque pale de rotor est ajustée de manière individuelle et/ou selon un cycle de rotation, en particulier de telle sorte que l'angle de pale (α) individuel ou sa valeur théorique se compose d'un angle de base identique pour toutes les pales de rotor et d'un angle supplémentaire prévu de manière individuelle pour chaque pale de rotor.

10. Procédé selon l'une quelconque des revendications précédentes, **caractérisé en ce qu'**est prévu un angle de pale minimal (αₘᵢₙ), qui est inférieur à l'angle de charge partielle (α_{T}) et l'angle de pale (α) peut être ajusté, éventuellement individuellement pour chaque pale de rotor, jusqu'audit angle de pale minimal (αₘᵢₙ).

11. Eolienne avec un rotor, qui présente des pales de rotor, dont l'angle de pale peut être ajusté, ainsi qu'avec des moyens qui sont mis au point pour
- faire fonctionner l'éolienne dans un mode de fonctionnement en charge partielle (T) pour des vitesses de vent (V_{W}) jusqu'à une vitesse de vent nominale (V_{N}), dans lequel dans le mode de fonctionnement en charge partielle (T), un angle de charge partielle (α_{T}) fixe est prévu pour l'angle de pale (α),
- faire fonctionner l'éolienne dans un mode de fonctionnement en pleine charge (V) pour des vitesses de vent (V_{W}) supérieures à la vitesse de vent nominale (V_{N}), dans lequel dans le mode de fonctionnement en pleine charge (V), l'angle de pale (α) est agrandi au fur et à mesure que la vitesse de vent (V_{W}) augmente et présente des valeurs supérieures à l'angle de charge partielle (α_{T}),
ainsi qu'avec des moyens qui sont mis au point pour
- régler, dans le mode de fonctionnement en charge partielle (T), une puissance en fonction de la vitesse de rotation et pour réduire, à partir d'une vitesse de rotation prédéfinie et/ou à partir d'une puissance prédéfinie, l'angle de pale (α) par rapport à l'angle de charge partielle (α_{T}), et
- ajuster l'angle de pale (α) avec une vitesse de rotation qui continue à augmenter ou une puissance qui continue à augmenter en fonction de la vitesse de rotation ou de la puissance pour réinitialiser l'angle de pale (α) sur l'angle de charge partielle (α_{T}) avant d'atteindre le mode de fonctionnement en pleine charge (V).
